(19) Europäisches Patentamt
European Patent Office
Office européen des brevets

(11) **EP 2 938 476 B1**

(12) **FASCICULE DE BREVET EUROPEEN**

(45) Date de publication et mention
de la délivrance du brevet:
**05.10.2016 Bulletin 2016/40**

(21) Numéro de dépôt: **13814907.5**

(22) Date de dépôt: **19.12.2013**

(51) Int Cl.:
*B29C 47/32* *(2006.01)*     *B29C 47/92* *(2006.01)*
*B29C 47/00* *(2006.01)*     *B29C 47/34* *(2006.01)*
*B29C 43/24* *(2006.01)*     *B29C 47/38* *(2006.01)*
*B29C 43/22* *(2006.01)*     *B29C 43/46* *(2006.01)*
*B29L 30/00* *(2006.01)*     *B29K 21/00* *(2006.01)*

(86) Numéro de dépôt international:
**PCT/EP2013/077433**

(87) Numéro de publication internationale:
**WO 2014/102143 (03.07.2014 Gazette 2014/27)**

(54) **MÉTHODE ET DISPOSITIF DE RÉGULATION D'UN DISPOSITIF D'EXTRUSION**

VERFAHREN UND VORRICHTUNG ZUR REGELUNG EINER EXTRUSIONSVORRICHTUNG

METHOD AND DEVICE FOR REGULATING AN EXTRUSION DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2012 FR 1262816**

(43) Date de publication de la demande:
**04.11.2015 Bulletin 2015/45**

(73) Titulaires:
• **Compagnie Générale des Etablissements
Michelin
63000 Clermont-Ferrand (FR)**
• **MICHELIN Recherche et Technique S.A.
1763 Granges-Paccot (CH)**

(72) Inventeur: **MONNEREAU, Patrice
F-63040 Clermont-Ferrand Cedex 9 (FR)**

(74) Mandataire: **Noel, Luminita
Manufacture Française
Des Pneumatiques Michelin
DGD/PI F35/Ladoux
23, Place des Carmes-Déchaux
63040 Clermont-Ferrand Cedex 9 (FR)**

(56) Documents cités:
**JP-A- H0 985 801**     **JP-A- S62 174 127**
**JP-A- 2006 305 976**     **US-A- 4 428 896**

**Description**

L'invention concerne le domaine de l'extrusion des mélanges d'élastomères plus particulièrement destinés à la fabrication des pneumatiques.

De manière connue, la fabrication des profilés formant les pneumatiques fait largement appel à des dispositifs d'extrusion qui ont pour fonction de produire des bandes de caoutchouc selon un profil déterminé. Ces dispositifs sont formés d'un corps et d'une vis montée à rotation dans ledit corps.

La forme du corps et de la vis et leur agencement sont réalisés de sorte que la mise en rotation de la vis a pour effet de fournir un travail mécanique au mélange dans le but d'en accroître la fluidité, d'une part, et de propulser ledit mélange vers une filière d'extrusion dans le but de conférer un profil déterminé au produit extrudé, d'autre part.

La bande continue sortant du moyen d'extrusion peut être enroulée sur des moyens de stockage en vue d'une utilisation ultérieure. L'invention s'intéresse plus particulièrement aux dispositifs d'extrusion utilisés pour alimenter directement un dispositif en aval du dispositif d'extrusion.

Un des problèmes posés par l'utilisation d'un dispositif d'extrusion couplé plus ou moins directement avec un dispositif aval destiné à mettre en oeuvre la bande continue, tel que par exemple un moyen d'assemblage, réside dans le fait que le débit du moyen d'extrusion devient plus ou moins dépendant du débit du dispositif de mise en oeuvre.

Il en résulte des variations importantes de débit pouvant aller de l'arrêt total jusqu'à la sollicitation de l'installation d'extrusion à son débit nominal. Cette difficulté est augmentée de la contrainte de devoir générer également un produit de profil constant pendant les phases de montée ou de baisse de consommation.

Ce problème est généralement résolu en disposant des moyens intermédiaires de compensation entre la sortie du dispositif d'extrusion et un dispositif aval d'enroulement du produit extrudé. Toutefois, ces moyens de compensation ne conviennent pas lorsque l'on veut déposer directement le produit extrudé sur un dispositif aval d'enroulement.

Le document US-4428896 décrit une méthode permettant le contrôle de la forme et des dimensions d'un profilé obtenu à l'aide d'une extrudeuse, puis transporté par un convoyeur vers un dispositif aval. La méthode de contrôle est basée sur la mesure de la vitesse de rotation initiale de la vis interne de l'extrudeuse et de celle de rotation du rouleau, de la mesure de l'épaisseur du profilé extrudé en sortie de l'extrudeuse et en sortie du convoyeur, ainsi que de son poids linéaire. Les valeurs de la vitesse de rotation de la vis d'extrusion et de celle du rouleau sont ensuite ajustées chacune par leur unité de réglage respective en fonction des mesures réalisées sur le profilé extrudé, à distance de la sortie de l'extrudeuse. Une telle méthode de contrôle a pour conséquence d'introduire du retard dans la régulation et ne convient pas lorsque l'on veut appliquer le profilé directement sur un dispositif aval situé en sortie de l'extrudeuse.

Une solution à ce problème a été apportée par le document FR 11/55591 au nom de la demanderesse qui décrit une méthode et des moyens de régulation d'une extrudeuse du type nez à rouleau à pose directe du ruban obtenu sur un dispositif aval. Selon ce document, la vitesse de rotation de la vis est directement proportionnelle à la vitesse de rotation du rouleau et elle est obtenue en multipliant la vitesse du rouleau par un coefficient de proportionnalité dont la valeur de consigne est établie préalablement par voie expérimentale. Le contrôle des paramètres du ruban obtenu en sortie de l'extrudeuse se fait par des capteurs couplés aux moyens de régulation qui agissent sur le rapport de vitesses entre le rouleau et la vis de l'extrudeuse, en corrigeant la valeur de consigne du coefficient proportionnalité. Ceci permet de synchroniser, à tout instant, le débit de la vis d'extrusion à celui du rouleau, tout en obtenant un temps de réponse rapide des moyens de régulation.

La vitesse du rouleau de l'extrudeuse décrite dans ce document impose la vitesse de pose du ruban sur le dispositif aval. Ainsi, un problème se pose lorsque, dans certaines conditions de fonctionnement, le rendement de la vis baisse, ce qui implique la commande par les moyens de régulation d'une accélération de la rotation de la vis pour maintenir le débit constant. Toutefois, il a été constaté que, à partir d'une certaine valeur de la vitesse de la vis, le mélange à l'intérieur de l'extrudeuse subit une élévation de température. Ceci a pour conséquences l'apparition des gaz dans le mélange, provoquant des bulles dans le ruban sortant de l'extrudeuse, et, parfois, une dégradation jusqu'à la formation d'agglomérats vulcanisés dans le produit sortant de l'extrudeuse.

Une solution à ce problème est de mesurer la température du mélange à l'intérieur de l'extrudeuse ou du produit sortant de celle-ci, mais ceci implique du retard dans la régulation, et conduit à des pertes de temps et de matière.

Une autre solution est de limiter en permanence la vitesse du rouleau de pose en deçà d'une valeur de sécurité, mais aux dépens d'une baisse manifeste de la productivité de l'extrudeuse.

En effet, il a été établi, lors des tests effectués en laboratoire, que le rendement d'une vis d'extrusion augmente avec la différence de température entre les composants mécaniques de l'extrudeuse, qui sont à température élevée en étant chauffés, et la bande d'élastomère qui est, elle, introduite en continu dans l'extrudeuse à la température ambiante.

Toutefois, lors d'un arrêt transitoire de l'extrudeuse, les calories des composants de la machine sont transmises au mélange d'élastomère et la différence de température baisse. La conséquence est que le rendement de la vis baisse et, lors du redémarrage de l'extrudeuse, celle-ci reçoit une commande d'accélération de la vis pour compenser la baisse du rendement. Une telle situation provoque un échauffement supplémentaire du mélange et un emballement de la vis.

Il en est de même lors d'une alimentation insuffisante en mélange élastomère de l'extrudeuse (par exemple lors de la casse de la bande d'élastomère qui alimente l'extrudeuse) quand le débit chute, la commande de régulation impose également une accélération de la vis avec, comme conséquences, l'emballement de la vis et la dégradation du mélange élastomère.

L'invention a pour objet de proposer une méthode de régulation d'un dispositif d'extrusion permettant de fournir, à tout instant et avec une bonne productivité, une bande continue de produit extrudé de profil constant, de bonne qualité, sans dégradation du mélange élastomère.

Ces buts sont atteints avec une méthode de régulation d'un dispositif d'extrusion destiné à la fabrication d'une bande continue de produit profilé en un mélange d'élastomère, comprenant une vis animée en rotation dans un corps fixe dont la sortie comporte une filière d'extrusion et au moins un rouleau cylindrique animé en rotation dont l'axe est perpendiculaire à la direction de sortie du produit de la filière, la vitesse de rotation de la vis ($\Omega_{vis}$) étant directement reliée à la vitesse de rotation du rouleau ($\Omega_{rouleau}$) par un coefficient de proportionnalité, ladite méthode de régulation comportant les étapes suivantes :

- on détermine pour un mélange élastomère donné et un produit profilé donné, une valeur de consigne Ks préétablie dudit coefficient de proportionnalité et les valeurs de consigne préétablies pour la vitesse du rouleau $\Omega_{rouleau}$ jusqu'à une consigne maximum de vitesse du rouleau $\Omega_{rouleau\ max}$, et on détermine la vitesse maximum de rotation de la vis $\Omega_{vis\ max}=Ks^*\Omega_{rouleau\ max}$,

- on mesure à chaque instant l'épaisseur (e) du produit profilé en sortie de la filière d'extrusion,

- on ajuste la valeur de consigne du coefficient Ks en fonction de la valeur de l'épaisseur (e) à une valeur corrigée Ks' de manière à ramener la valeur mesurée de l'épaisseur à une valeur de consigne (e consigne) de l'épaisseur du profilé (P),

- on corrige la vitesse de rotation de la vis en tenant compte de la nouvelle valeur Ks', telle que $\Omega'_{vis}=Ks'^*\Omega\ rouleau$.

Ladite méthode est caractérisée en ce qu'on ajuste la vitesse de consigne du rouleau en fonction de la valeur corrigée Ks' du coefficient de proportionnalité lorsque la vitesse de rotation de la vis $\Omega'_{vis}$ dépasse une vitesse limite de patinage.

Cette méthode prévoit que la vitesse de rotation de la vis est directement proportionnelle à la vitesse de rotation du rouleau et qu'elle est obtenue en multipliant la vitesse du rouleau par un coefficient de proportionnalité dont la valeur de consigne est établie préalablement par voie expérimentale. La vitesse du rouleau est une valeur de consigne établie pour un mélange élastomère donné et un produit profilé prédéfini. Ceci permet de synchroniser, à tout instant, la vitesse de la vis à celle du rouleau dans un rapport donné par le coefficient de proportionnalité, et donc les débits de l'extrudeuse et celui du rouleau.

Pour améliorer la précision et la dynamique de réponse de la boucle de régulation, la méthode de régulation de l'invention intègre la mesure de l'épaisseur, ce qui implique d'ajuster le coefficient de proportionnalité à l'aide d'un facteur de correction, par exemple avec un coefficient de proportionnalité corrigé qui soit égal au produit de la correction par la valeur de consigne du coefficient de proportionnalité. La vitesse de la vis est donc calculée en prenant en compte le coefficient de proportionnalité corrigé.

Ainsi, après avoir constaté une diminution de l'épaisseur du profilé en sortie du dispositif d'extrusion, la correction imposée par la modification du coefficient de proportionnalité impose une augmentation de la vitesse de la vis par rapport à la vitesse du rouleau.

Selon l'invention, on adapte la vitesse du rouleau (qui est la vitesse de pose sur un dispositif aval) en fonction de la valeur corrigée du coefficient de proportionnalité Ks de manière à éviter que la valeur corrigée de la vitesse de la vis multipliée par le coefficient de proportionnalité corrigé dépasse la vitesse limite de patinage de la vis. Par vitesse limite de patinage, on comprend une vitesse qui a été déterminée par voie expérimentale pour un dispositif d'extrusion donné et un mélange élastomère prédéterminé à partir de laquelle la vis commence à s'emballer et tourne sans débiter de produit. A titre d'exemple la vitesse limite de patinage peut être déterminée en suivant l'évolution de la vitesse de la vis et en la comparant à tout instant à celle du rouleau, la valeur de la vitesse limite de patinage étant observée lorsque la vitesse de la vis devient supérieure à la vitesse maximum prédéterminée pour un mélange donné et que, au même moment, la vitesse du rouleau est inférieure à la vitesse maximum autorisée pour un mélange donné.

Ainsi, lorsque la vitesse de la vis atteint la vitesse limite de patinage, on réduit la vitesse de pose, ce qui fait que la vitesse de la vis va baisser en étant liée à la vitesse du rouleau par le coefficient de proportionnalité. Autrement dit, on freine le rouleau afin d'éviter le patinage et l'emballement de la vis. Si la vitesse corrigée de la vis est en dessous de la vitesse limite de patinage, le rouleau peut continuer à tourner à sa vitesse de consigne préétablie.

Ceci permet d'obtenir à tout moment une pose de produit profilé ayant une bonne épaisseur et des bonnes caractéristiques physico-chimiques du mélange élastomère et une productivité correcte du dispositif d'extrusion.

Avantageusement, on calcule la vitesse du rouleau $\Omega_{rouleau\ loi}$ de manière à ce que la vitesse de la vis ne dépasse pas la vitesse limite de patinage avec la formule :

$$\Omega_{rouleau\ loi} = (\Omega_{vis\ max}{}^{n/n-1}/\ \Omega_{rouleau\ max}{}^{1/n-1})*1/Ks'^{\ n/n-1},\ \text{avec n une constante}$$

avec n une constante correspondant à un mélange élastomère donné.

On aurait pu, dans une variante de l'invention, définir de manière expérimentale les valeurs de la vitesse limite de patinage en fonction de la vitesse du rouleau et tracer ensuite une courbe illustrant la variation de la vitesse limite de patinage passant par plusieurs points ainsi définis. On préfère toutefois utiliser une méthode de calcul qui est plus facile à implémenter dans un dispositif de régulation à moyens de calcul numérique.

De préférence, on compare la vitesse calculée du rouleau $\Omega_{rouleau\ loi}$ à la vitesse de consigne prédéfinie pour une épaisseur de consigne donnée $\Omega_{rouleau}$ et en ce que l'on choisit comme valeur de référence de la vitesse du rouleau $\Omega_{rouleau\ réf}$ celle qui a la valeur moindre parmi les deux.

Par vitesse de référence du rouleau on comprend la vitesse imposée par les moyens de régulation au rouleau de pose. La vitesse de référence du rouleau est ainsi adaptée automatiquement par les moyens de régulation de l'invention en fonction de la variation du coefficient de proportionnalité de manière à éviter le patinage de la vis tout en permettant de garantir une bonne productivité du dispositif d'extrusion.

Avantageusement, l'on réduit la vitesse de rotation du rouleau lorsque la vitesse de rotation de la vis dépasse une vitesse limite de patinage. De ce fait, la vitesse de la vis baissera, car elle est directement liée par le coefficient de proportionnalité à la vitesse du rouleau, ce qui permet d'éviter le patinage de la vis.

Avantageusement, lorsque la vitesse de la vis ne dépasse pas la vitesse limite de patinage, la vitesse du rouleau augmente avec la diminution de la valeur corrigée Ks' du coefficient de proportionnalité.

Ceci permet, lorsque le régime de fonctionnement de la vis s'améliore, c'est-à-dire une fois le mélange chaud évacué, le débit par tour de vis augmente et le rendement s'améliore, de commander une correction plus faible du coefficient de proportionnalité Ks' et, de ce fait la vitesse du rouleau peut augmenter progressivement jusqu'aux valeurs d'un fonctionnement optimum préétabli pour un mélange élastomère et un dispositif d'extrusion donnés.

L'objectif de l'invention est également atteint avec un dispositif d'extrusion destiné à la fabrication d'une bande continue de produit profilé en un mélange d'élastomère, comportant des moyens de régulation aptes à mettre en oeuvre la méthode de l'invention, comprenant une vis animée en rotation dans un corps fixe dont la sortie comporte une filière d'extrusion et au moins un rouleau cylindrique animé en rotation dont l'axe est perpendiculaire à la direction de sortie du produit de la filière, comportant des moyens de pilotage de la vitesse de rotation de la vis ($\Omega_{vis}$) en fonction de la vitesse du rouleau, la vitesse de la vis étant directement reliée à la vitesse de rotation du rouleau ($\Omega_{rouleau}$) par un coefficient de proportionnalité, et

- des moyens de mise en mémoire des valeurs déterminées pour un mélange élastomère donné et un produit profilé donné, de la valeur de consigne Ks du coefficient de proportionnalité et des valeurs de consigne de la vitesse du rouleau $\Omega_{rouleau}$ jusqu'à une consigne maximum de vitesse du rouleau $\Omega_{rouleau\ max}$, pour laquelle la vitesse maximum de rotation de la vis est $\Omega_{vis\ max}=KS*\Omega_{rouleau\ max}$,

- des moyens de mesure qui déterminent à chaque instant l'épaisseur (e) du produit profilé en sortie de la filière d'extrusion,

- un premier moyen de régulation qui ajuste la valeur de consigne Ks du coefficient de proportionnalité en fonction de la valeur de l'épaisseur (e) à une valeur Ks' de manière à ramener la valeur mesurée à une valeur de consigne (e consigne) de l'épaisseur du profilé (P),

- un moyen de calcul de la vitesse de rotation de la vis en tenant compte de la nouvelle valeur Ks', telle que $\Omega'_{vis}=Ks'*\Omega_{rouleau}$,

caractérisé en ce qu'il comprend des moyens de contrôle qui ajustent la vitesse du rouleau en fonction de la valeur corrigée Ks' du coefficient de proportionnalité lorsque la vitesse de rotation de la vis $\Omega'_{vis}$ dépasse une vitesse limite de patinage.

Préférentiellement, ce dispositif comprend lesdits moyens de contrôle qui comportent des moyens de calcul de la vitesse du rouleau $\Omega_{rouleau\ loi}$ de manière à ce que la vitesse de la vis ne dépasse pas la vitesse limite de patinage avec la formule :

$$\Omega_{\text{rouleau loi}} = (\Omega_{\text{vis max}}^{n/n-1} / \Omega_{\text{rouleau max}}^{1/n-1})*1/Ks'^{n/n-1}, \text{ avec n une constante associée à}$$

avec n une constante associée à un mélange élastomère donné.

Avantageusement, lesdits moyens de contrôle comparent la vitesse calculée du rouleau $\Omega_{\text{rouleau loi}}$ à la vitesse de consigne prédéfinie pour une épaisseur de consigne donnée $\Omega_{\text{rouleau}}$ et ils choisissent comme valeur de référence de la vitesse du rouleau $\Omega_{\text{rouleau réf}}$ celle qui a la valeur moindre parmi les deux.

De préférence, lesdits moyens de contrôle réduisent la vitesse de rotation du rouleau lorsque la vitesse de rotation de la vis dépasse une vitesse limite de patinage.

Avantageusement, lorsque la vitesse de la vis ne dépasse pas la vitesse limite de patinage, lesdits moyens de contrôle augmentent la vitesse du rouleau avec la diminution de la valeur corrigée Ks' du coefficient de proportionnalité.

L'invention sera mieux comprise grâce à la suite de la description, qui s'appuie sur les figures suivantes :

- la figure 1 représente de manière schématique un dispositif d'extrusion de l'invention et les boucles de régulation utilisées pour mettre en oeuvre la méthode selon l'invention ;

- la figure 2 illustre l'évolution du coefficient de proportionnalité en fonction de l'épaisseur mesurée du produit profilé pour un mélange d'élastomère;

- la figure 3 illustre différentes courbes représentatives de la vitesse limite de patinage pour différents mélanges d'élastomère ;

- la figure 4 illustre de manière graphique l'application de la méthode de régulation de l'invention à un mélange d'élastomère.

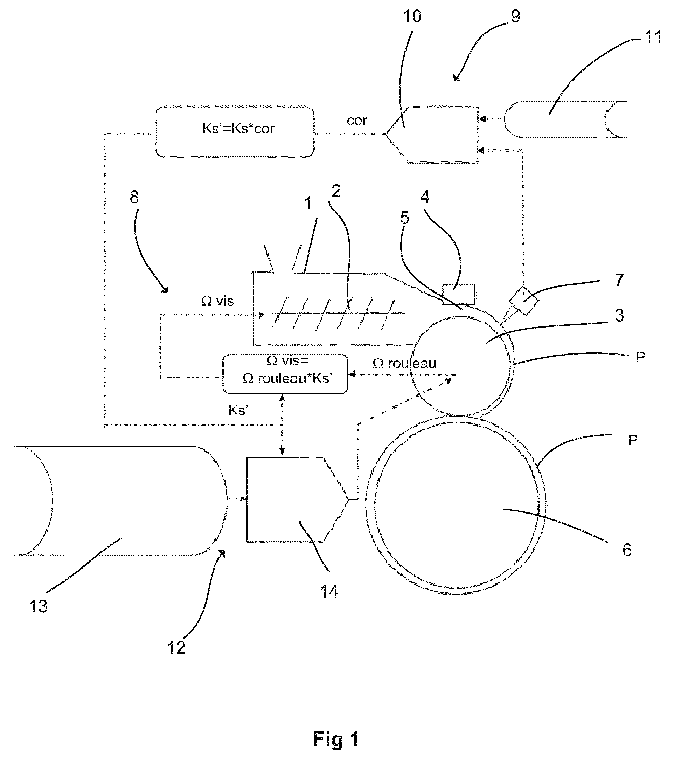

Les moyens d'extrusion représentés à la figure 1, comprennent une vis 2 animée en rotation par un moteur (non représenté) dans un corps cylindrique 1. En aval de la vis, la filière d'extrusion 5 est formée par l'entrefer entre une lame profilée 4 et un rouleau 3 animé également en rotation. Dans une variante de l'invention, la filière d'extrusion 5 est formée entre deux rouleaux rotatifs, chacun étant entraîné en rotation autour de son axe longitudinal qui est perpendiculaire à la direction de sortie du produit profilé.

Le rouleau 3 collabore directement avec la surface de réception d'un tambour 6 sur laquelle le produit P est destiné à être enroulé. Dans cette configuration, le rouleau 3 sert également de rouleau d'applique de la bande de produit extrudé sur la surface de réception. Cet agencement s'avère particulièrement avantageux lorsque l'on cherche, selon l'exemple illustré à la figure 1, à enrouler une bandelette de mélange d'élastomère de section constante par trancanage de manière à reconstituer une section finale sur une surface de réception telle qu'un tambour d'assemblage.

Afin de pouvoir poser directement le produit P sur la surface de réception du tambour 6, on doit pouvoir faire varier le débit massique sortant de l'extrudeuse proportionnellement à la vitesse de sortie, de sorte que la section du profilé extrudé reste constante. La vitesse de sortie peut alors être modifiée à volonté depuis une valeur nulle jusqu'à une valeur nominale, sans altérer la géométrie du produit.

Pour ceci, le dispositif comprend des moyens de mesure de la vitesse, tels que des codeurs optiques, qui sont associés au rouleau 3 et à la vis 2 et une première boucle de régulation 8 de la vitesse de la vis 2. Ainsi, le codeur optique associé au rouleau 3 détermine à chaque instant la vitesse de rotation du rouleau, $\Omega_{\text{rouleau}}$, et transmet cette information à la commande de pilotage de la vitesse de la vis, de sorte que, à tout instant, la vitesse de rotation de la vis $\Omega_{\text{vis}}$, soit égale au produit de la vitesse de rotation du rouleau $\Omega_{\text{rouleau}}$, par un coefficient de proportionnalité K, telle que $\Omega_{\text{vis}} = K* \Omega_{\text{rouleau}}$.

La valeur de consigne Ks du coefficient de proportionnalité K est déterminée expérimentalement pour chaque mélange d'élastomère utilisé avec un dispositif d'extrusion spécifique. Pour ce faire, on sélectionne une vitesse du rouleau et on détermine la vitesse de la vis nécessaire pour obtenir un profilé de la section désirée. On observe que ce coefficient de proportionnalité est sensiblement constant sur la plage de fonctionnement normal du dispositif d'extrusion.

Toutefois, des variations du coefficient de proportionnalité peuvent être observées en fonction du débit d'écoulement, en raison des variations de pression et de température du mélange dans la voûte en amont de la filière d'extrusion. Ces variations peuvent être appréciées pendant la phase d'apprentissage et de détermination expérimentale du coefficient de proportionnalité.

Pour corriger ces erreurs de linéarité, on introduit une deuxième boucle de régulation 9 basée sur la mesure de l'épaisseur « e » du profilé P directement en sortie de la filière d'extrusion à l'aide d'un capteur de mesure de l'épaisseur 7, par exemple du type sans contact tels que des moyens de mesure utilisant un faisceau laser. La valeur mesurée de l'épaisseur « e » est introduite dans un régulateur d'épaisseur 10 qui reçoit également les valeurs de consigne de l'épaisseur « e ~consigne~ » en provenance des moyens de mise en mémoire 11. Le régulateur d'épaisseur 10 calcule un coefficient de correction « cor » du coefficient de proportionnalité. Ainsi, on modifie la valeur de consigne du coefficient de proportionnalité Ks à une valeur corrigée Ks' de manière à ramener la valeur mesurée de l'épaisseur e à une valeur de consigne e consigne de l'épaisseur du profilé P.

La nouvelle valeur du coefficient de proportionnalité Ks' est introduite dans la première boucle de régulation 8 de la vitesse vis, de sorte que, avec la valeur du coefficient de proportionnalité corrigé Ks' obtenu par la relation Ks' = Ks*cor, on obtienne la vitesse par la relation $\Omega'_{vis}$=Ks'*$\Omega_{rouleau}$ ou $\Omega'_{vis}$=Ks*cor* $\Omega_{rouleau}$.

Le suivi de l'écart entre l'épaisseur mesurée e et l'épaisseur de consigne e consigne est opéré par un régulateur de type PID conventionnel.

Ces régulations permettent d'obtenir un produit profilé P de section constante à la sortie de l'extrudeuse lors d'une production en continu. Toutefois, lors d'une reprise après arrêt temporaire de la production (on comprend un arrêt sans vider le corps 1 du dispositif), la température du mélange d'élastomère à l'intérieur du dispositif d'extrusion augmente notamment à l'entrée de la vis et le rendement du dispositif d'extrusion baisse. En effet, il a été établi que le débit optimum par tour de vis est obtenu lorsque le mélange d'élastomère situé à l'entrée de la vis est froid (environ 20°C) et que celui situé en sortie de vis est chaud (environ 110°C), par rapport à la température des éléments mécaniques. De ce fait, lors d'un arrêt de l'extrudeuse, le mélange d'élastomère à l'entrée se réchauffe par le contact prolongé avec les éléments mécaniques qui sont plus chauds, alors que la température du mélange d'élastomère se trouvant vers la sortie descend au contact des éléments mécaniques qui se refroidissent.

Le rendement de la vis baisse également lorsque le débit d'alimentation du dispositif d'extrusion baisse ou lorsque le mélange d'élastomère à l'intérieur du dispositif devient plus fluide.

Pour corriger cette baisse de rendement, le dispositif d'extrusion de l'invention comprend une troisième boucle de régulation 12 qui permet d'adapter la vitesse de pose, qui est la vitesse de référence du rouleau, en fonction du rendement de la vis.

Le rendement de la vis étant exprimé par le débit d'élastomère par tour de vis, pour une même vis, le rapport entre la vitesse du rouleau et la vitesse de la vis est représentatif de l'inverse du rendement de la vis d'extrusion. Ainsi, pour garder une section constante, lorsque le rendement de la vis baisse, la commande de pilotage de la vitesse de la vis demande une accélération de la vis pour maintenir le débit constant. L'accélération de la vis dans les conditions de travail de faible rendement de celle-ci mènerait à une augmentation de la température du mélange et, de ce fait, à l'emballement et au patinage de la vis.

Pour éviter l'emballement de la vis sur une baisse transitoire de son débit par tour de vis, la solution proposée par l'invention est d'adapter la vitesse du rouleau en fonction de l'évolution du coefficient de proportionnalité K. Ainsi, lorsque la vis 2 reçoit une commande d'accélération, la solution est de baisser la vitesse du rouleau 3. De ce fait, la vitesse de la vis 2 baissera, car elle est directement liée par le coefficient de proportionnalité à la vitesse du rouleau 3.

Pour ceci, on détermine l'évolution de la vitesse limite de patinage de la vis en fonction de la vitesse du rouleau et de la vitesse maximum de la vis qui est acceptable pour un mélange d'élastomère donné. Cette évolution de la vitesse limite de patinage est prise en compte par les moyens de contrôle de la vitesse du rouleau qui fournissent une valeur de référence aux moyens de commande de la vitesse du rouleau 2, tel qu'il sera expliqué sur la base de l'exemple qui suit.

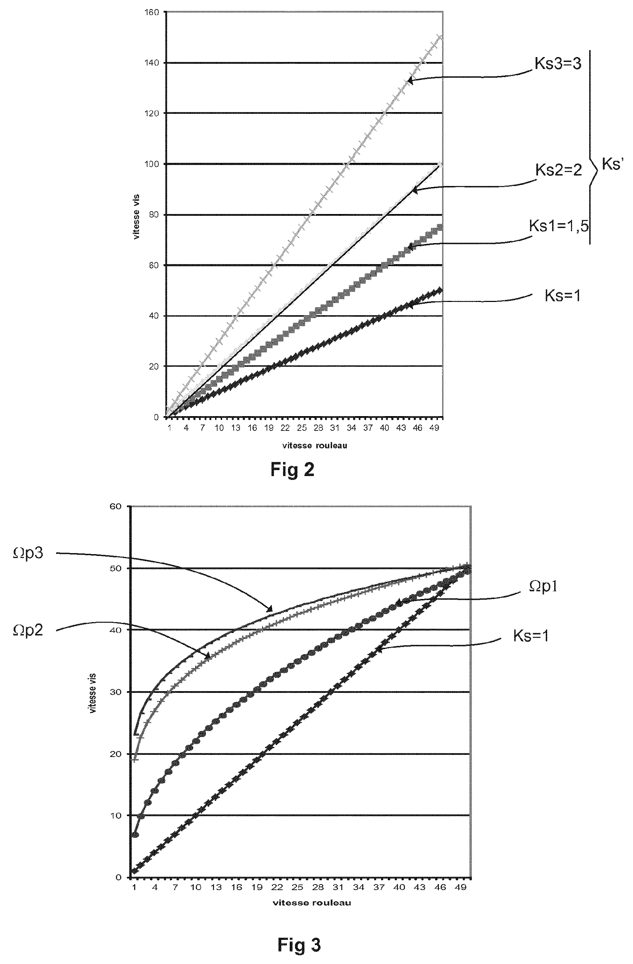

La figure 2 illustre un exemple d'évolution du coefficient de proportionnalité K en fonction de l'épaisseur mesurée du produit profilé. Ainsi, le coefficient de proportionnalité varie entre une valeur de consigne Ks=1 (lorsque l'épaisseur est constante et égale à la valeur de consigne) et une valeur corrigée Ks' (qui prend en compte la baisse de l'épaisseur qui est une conséquence de la chute du débit). Dans l'exemple représenté à la figure 2, les valeurs corrigées Ks' sont Ks1=1,5, Ks2=2 et Ks3=3. La valeur corrigée Ks' est appliquée à la relation qui relie la vitesse du rouleau à celle de la vis afin de ramener l'épaisseur à sa valeur de consigne. On remarque sur la figure 2 que, pour certaines valeurs de la vitesse du rouleau, la vitesse de la vis peut atteindre des valeurs importantes selon la valeur Ks' appliquée.

L'invention propose une troisième boucle de régulation 12 comportant des moyens de contrôle 14 de la vitesse du rouleau en fonction de la valeur du coefficient de proportionnalité corrigé Ks', calculé par la deuxième boucle de régulation 9, de manière à ce que la vitesse de la vis ne dépasse pas la vitesse limite de patinage.

La figure 3 illustre, par des courbes exponentielles, l'évolution de la vitesse limite de patinage de la vis pour trois mélanges d'élastomère et une même vis d'extrusion. L'évolution de la vitesse limite est définie dans l'exemple représenté à l'aide d'une loi d'évolution dont l'équation est

$$\Omega_{vis} = a\sqrt[n]{\Omega_{rouleau}} \quad (1)$$

avec a=$\Omega_{vis\,max}$/$\Omega_{rouleau\,max}$$^{1/n}$, et n une constante associée à un mélange d'élastomère donné.

Dans l'exemple représenté, la première courbe $\Omega_{p1}$ est tracée pour une constante n=2 et un coefficient a=7, la deuxième courbe $\Omega_{p2}$ est tracée pour une constante n=4 et un coefficient a=19 et la troisième courbe $\Omega_{p3}$ est tracée

EP 2 938 476 B1

pour une constante n=5 et un coefficient a=23. La constante n dépend du type de mélange d'élastomère utilisé, elle est de préférence comprise entre 2 et 6. Ainsi, on constate que plus la valeur de la constante n est élevée, plus la limitation appliquée à la vitesse de pose est faible.

On sait par ailleurs que, selon les boucles de régulation du dispositif de l'invention :

$$\Omega_{vis}=Ks'*\Omega_{rouleau} \quad (2)$$

En remplaçant dans l'équation (1), la vitesse de la vis avec l'équation (2), on obtient la vitesse calculée du rouleau :

$$\Omega_{rouleau\ loi} = (\Omega_{vis\ max}^{n/n-1}/\Omega_{rouleau\ max}^{1/n-1})*1/Ks'^{n/n-1}$$

On peut ainsi calculer la vitesse du rouleau $\Omega_{rouleau\ loi}$ en fonction du coefficient de proportionnalité corrigé Ks'. Cette valeur calculée de la vitesse du rouleau est analysée par les moyens de contrôle 14 qui la comparent à la vitesse de consigne $\Omega_{rouleau}$ déterminée pour une recette préétablie. Une telle recette est réalisée pour un mélange d'élastomère donné et une épaisseur de consigne donnée et est stockée dans la mémoire 13 de la troisième boucle de régulation 12 du dispositif. Les valeurs qui caractérisent une recette sont : la vitesse de consigne du rouleau, la vitesse maximum du rouleau, la vitesse maximum de la vis, la valeur de consigne Ks du coefficient de proportionnalité et la constante n. Si la valeur calculée de la vitesse du rouleau $\Omega_{rouleau\ loi}$ est inférieure à la valeur de la vitesse de consigne du rouleau définie dans la recette, alors la valeur de référence de la vitesse du rouleau choisie par les moyens de contrôle est la valeur calculée de la vitesse du rouleau $\Omega_{rouleau\ loi}$. Dans le cas contraire, la valeur de référence de la vitesse du rouleau est celle définie dans la recette.

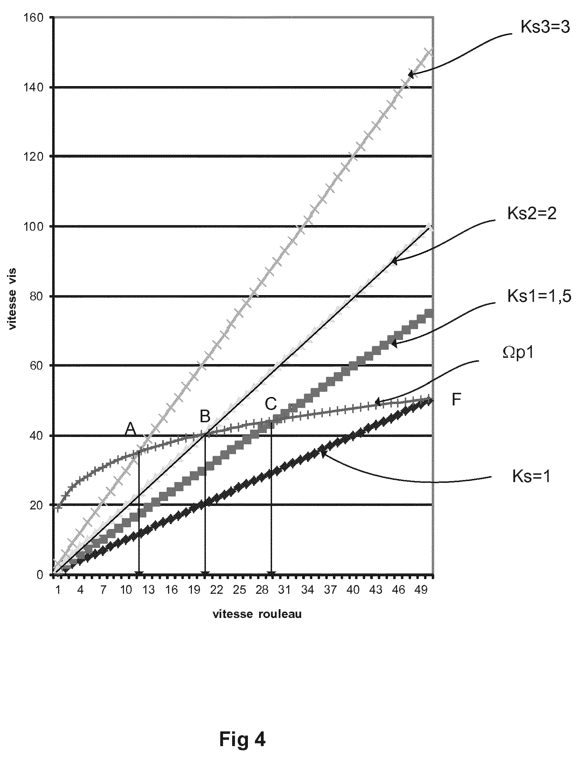

Cette méthode de régulation peut également être expliquée en référence à la figure 4 où on a superposé les droites représentant les coefficients de proportionnalité de la figure 2 et une courbe de la vitesse limite de patinage de la vis illustrée à la figure 3. La vitesse de référence du rouleau est le point d'intersection entre la courbe $\Omega_{p1}$ et la droite de référence du coefficient Ks. Ainsi, lorsque la vitesse corrigée de la vis se trouve sur la droite $Ks_3$, mais au-dessus de la courbe $\Omega_{p1}$, on choisit la vitesse du rouleau au point A. Pour une vitesse du rouleau correspondant au point A, le dispositif d'extrusion peut produire un profilé P ayant la bonne épaisseur, mais avec une vitesse de pose plus faible que celle de la recette. Lorsque le régime de fonctionnement de la vis s'améliore, c'est-à-dire une fois le mélange chaud évacué, le débit par tour de vis augmente et le rendement s'améliore, ce qui fait que la boucle de régulation commande une correction plus faible du coefficient de proportionnalité Ks' et la vitesse du rouleau peut augmenter jusqu'aux valeurs correspondant au point B, puis au point C jusqu'au point F qui correspond aux valeurs maximum des vitesses de la vis et du rouleau.

On obtient ainsi, avec la méthode de régulation et le dispositif de l'invention, un ajustement automatique de la vitesse du rouleau (ou de la vitesse de pose) pour une vitesse de la vis du dispositif d'extrusion qui évite le patinage et fournit un produit profilé ayant des bonnes dimensions et de bonnes propriétés physico-chimiques, pour une productivité optimale du dispositif.

D'autres variantes et modes de réalisation de l'invention peuvent être envisagés sans sortir du cadre de ses revendications.

## Revendications

1. Méthode de régulation d'un dispositif d'extrusion destiné à la fabrication d'une bande continue de produit profilé (P) en un mélange d'élastomère, comprenant une vis (2) animée en rotation dans un corps (1) fixe dont la sortie comporte une filière d'extrusion (5) et au moins un rouleau cylindrique (3) animé en rotation, la vitesse de rotation de la vis ($\Omega_{vis}$) étant directement reliée à la vitesse de rotation du rouleau ($\Omega_{rouleau}$) par un coefficient de proportionnalité, ladite méthode de régulation comportant les étapes suivantes :

   - on détermine pour un mélange d'élastomère donné et un produit profilé (P) donné, une valeur de consigne Ks du coefficient de proportionnalité et les valeurs de consigne de la vitesse du rouleau $\Omega_{rouleau}$ jusqu'à une consigne maximum de vitesse du rouleau $\Omega_{rouleau\ max}$, pour laquelle la vitesse maximum de rotation de la vis est $\Omega_{vis\ max}=Ks*\Omega_{rouleau\ max}$,
   - on mesure à chaque instant l'épaisseur (e) du produit profilé (P) en sortie de la filière d'extrusion (5),
   - on corrige la valeur de consigne du coefficient Ks en fonction de la valeur mesurée de l'épaisseur (e) à une valeur corrigée Ks' de manière à ramener ladite valeur mesurée à une valeur de consigne (e consigne) de l'épaisseur du profilé (P),
- on corrige la vitesse de rotation de la vis en tenant compte de la nouvelle valeur corrigée Ks' du coefficient de proportionnalité, telle que $\Omega'_{vis} = Ks'^* \Omega$ rouleau

**caractérisée en ce qu'**on ajuste la vitesse du rouleau en fonction de la valeur corrigée Ks' du coefficient de proportionnalité lorsque la vitesse de rotation de la vis $\Omega'_{vis}$ dépasse une vitesse limite de patinage.

2. Méthode de régulation selon la revendication 1, **caractérisée en ce que** l'on calcule la vitesse du rouleau $\Omega_{rouleau\ loi}$ de manière à ce que la vitesse de la vis ne dépasse pas la vitesse limite de patinage avec la formule :

$$\Omega_{rouleau\ loi} = (\Omega_{vis\ max}^{\ n/n-1} / \Omega_{rouleau\ max}^{\ 1/n-1}) * 1/Ks'^{\ n/n-1}, \text{ avec n une constante}$$

avec n une constante correspondant à un mélange d'élastomère donné.

3. Méthode de régulation selon la revendication 2, **caractérisée en ce que** l'on compare la vitesse calculée du rouleau $\Omega_{rouleau\ loi}$ à la vitesse de consigne prédéfinie pour une épaisseur de consigne donnée $\Omega_{rouleau}$ et **en ce que** l'on choisit comme valeur de référence de la vitesse du rouleau $\Omega_{rouleau\ réf}$ celle qui a la valeur moindre parmi les deux.

4. Méthode de régulation selon l'une des revendications précédentes, **caractérisée en ce que** l'on réduit la vitesse de rotation du rouleau lorsque la vitesse de rotation de la vis dépasse une vitesse limite de patinage.

5. Méthode de régulation selon la revendication 4, **caractérisée en ce que**, lorsque la vitesse de la vis ne dépasse pas la vitesse limite de patinage, la vitesse du rouleau augmente avec la diminution de la valeur corrigée Ks' du coefficient de proportionnalité.

6. Dispositif d'extrusion destiné à la fabrication d'une bande continue de produit profilé (P) en un mélange d'élastomère, comprenant une vis (2) animée en rotation dans un corps (1) fixe dont la sortie comporte une filière d'extrusion (5) et au moins un rouleau cylindrique (3) animé en rotation dont l'axe est perpendiculaire à la direction de sortie du produit de la filière, comportant des moyens de régulation aptes à mettre en oeuvre une méthode selon l'une des revendications 1 à 4, notamment des moyens de pilotage de la vitesse de rotation de la vis ($\Omega_{vis}$) en fonction de la vitesse du rouleau, la vitesse de la vis étant directement reliée à la vitesse de rotation du rouleau ($\Omega_{rouleau}$) par un coefficient de proportionnalité, et

- des moyens de mise en mémoire (13) des valeurs déterminées pour un mélange élastomère donné et un produit profilé (P) donné, de la valeur de consigne Ks du coefficient de proportionnalité et des valeurs de consigne de la vitesse du rouleau $\Omega_{rouleau}$ jusqu'à une consigne maximum de vitesse du rouleau $\Omega_{rouleau\ max}$, pour laquelle la vitesse maximum de rotation de la vis est $\Omega_{vis\ max} = KS^* \Omega_{rouleau\ max}$,
- des moyens de mesure qui déterminent à chaque instant l'épaisseur (e) du produit profilé (P) en sortie de la filière d'extrusion (5),
- un premier moyen de régulation qui corrige la valeur de consigne du coefficient Ks en fonction de la valeur de l'épaisseur (e) à une valeur Ks' de manière à ramener la valeur mesurée à une valeur de consigne (e consigne) de l'épaisseur du profilé (P),
- un moyen de calcul de la vitesse de rotation de la vis en tenant compte de la nouvelle valeur Ks', telle que $\Omega'_{vis} = Ks'^* \Omega_{rouleau}$

**caractérisé en ce qu'**il comprend des moyens de contrôle qui ajustent la vitesse du rouleau en fonction de la valeur corrigée Ks' du coefficient de proportionnalité lorsque la vitesse de rotation de la vis $\Omega'_{vis}$ dépasse une vitesse limite de patinage.

7. Dispositif d'extrusion selon la revendication 6, **caractérisé en ce que** lesdits moyens de contrôle comportent des moyens de calcul de la vitesse du rouleau $\Omega_{rouleau\ loi}$ de manière à ce que la vitesse de la vis ne dépasse pas la vitesse limite de patinage avec la formule :

$$\Omega_{rouleau\ loi} = (\Omega_{vis\ max}^{\ n/n-1} / \Omega_{rouleau\ max}^{\ 1/n-1}) * 1/Ks'^{\ n/n-1}, \text{ avec n une constante associée}$$

avec n une constante associée à un mélange élastomère donné.

8.  Dispositif d'extrusion selon la revendication 7, **caractérisé en ce que** lesdits moyens de contrôle comparent la vitesse calculée du rouleau $\Omega_{\text{rouleau loi}}$ à la vitesse de consigne prédéfinie pour une épaisseur de consigne donnée $\Omega_{\text{rouleau}}$ et **en ce qu'**ils choisissent comme valeur de référence de la vitesse du rouleau $\Omega_{\text{rouleau réf}}$ celle qui a la valeur moindre parmi les deux.

9.  Dispositif d'extrusion selon l'une des revendications 6 à 8, **caractérisé en ce que** lesdits moyens de contrôle réduisent la vitesse de rotation du rouleau lorsque la vitesse de rotation de la vis dépasse une vitesse limite de patinage.

10. Dispositif d'extrusion selon la revendication 9, **caractérisé en ce que**, lorsque la vitesse de la vis ne dépasse pas la vitesse limite de patinage, lesdits moyens de contrôle augmentent la vitesse du rouleau avec la diminution de la valeur corrigée Ks' du coefficient de proportionnalité.

**Patentansprüche**

1.  Verfahren zum Regulieren einer Strangpressvorrichtung, die für die Fertigung eines ununterbrochenen Bandes eines Profilprodukts (P) aus einem Elastomergemisch bestimmt ist und Folgendes umfasst: eine Schraube (2), die in einem festen Körper (1), dessen Ausgang ein Strangpressmundstück (5) aufweist, rotatorisch angetrieben wird, und wenigstens eine rotatorisch angetriebene zylindrische Rolle (3), wobei die Drehgeschwindigkeit ($\Omega_{\text{Schraube}}$) der Schraube mit der Drehgeschwindigkeit ($\Omega_{\text{Rolle}}$) der Rolle über einen Proportionalitätskoeffizienten direkt in Beziehung steht, wobei das Regulierungsverfahren die folgenden Schritte umfasst:

    - Bestimmen für ein gegebenes Elastomergemisch und ein gegebenes Profilprodukt (P) eines Sollwerts Ks des Proportionalitätskoeffizienten und der Sollwerte der Rollengeschwindigkeit $\Omega_{\text{Rolle}}$ bis zu einem maximalen Sollwert $\Omega_{\text{Rolle max}}$ der Rollengeschwindigkeit, für den die maximale Drehgeschwindigkeit der Schraube $\Omega_{\text{Schraube max}} = Ks * \Omega_{\text{Rolle max}}$ ist,
    - Messen zu jedem Zeitpunkt der Dicke (e) des Profilprodukts (P) am Ausgang des Strangpressmundstücks (5),
    - Korrigieren des Sollwerts des Koeffizienten Ks als Funktion des gemessenen Werts der Dicke (e) auf einen korrigierten Wert Ks', derart, dass der gemessene Wert auf den Sollwert ($e_{\text{Sollwert}}$) der Dicke des Profils (P) zurückgeführt wird,
    - Korrigieren der Drehgeschwindigkeit der Schraube unter Berücksichtigung des neuen korrigierten Werts Ks' des Proportionalitätskoeffizienten, derart, dass $\Omega'_{\text{Schraube}} = Ks' * \Omega_{\text{Rolle}}$,

    **dadurch gekennzeichnet, dass** die Rollengeschwindigkeit als Funktion des korrigierten Werts Ks' des Proportionalitätskoeffizienten eingestellt wird, wenn die Drehgeschwindigkeit $\Omega'_{\text{Schraube}}$ der Schraube eine Schlupf-Grenzgeschwindigkeit überschreitet.

2.  Regulierungsverfahren nach Anspruch 1, **dadurch gekennzeichnet, dass** die Rollengeschwindigkeit $\Omega_{\text{Rolle Gesetz}}$ so, dass die Geschwindigkeit der Schraube die Schlupf-Grenzgeschwindigkeit nicht überschreitet, gemäß der folgenden Formel berechnet wird:

$$\Omega_{\text{Rolle Gesetz}} = \left( \frac{\Omega_{\text{Schraube max}}^{n/n-1}}{\Omega_{\text{Rolle max}}^{1/n-1}} \right) \cdot \frac{1}{Ks'}^{n/n-1},$$

wobei n eine Konstante ist, die einem gegebenen Elastomergemisch entspricht.

3.  Regulierungsverfahren nach Anspruch 2, **dadurch gekennzeichnet, dass** die berechnete Geschwindigkeit $\Omega_{\text{Rolle Gesetz}}$ der Rolle mit der im Voraus definierten Sollgeschwindigkeit $\Omega_{\text{Rolle}}$ für eine gegebene Solldicke verglichen wird und dass als Referenzwert $\Omega_{\text{Rolle Referenz}}$ der Rollengeschwindigkeit jener Wert gewählt wird, der der Kleinere von den beiden Werten ist.

4.  Regulierungsverfahren nach einem der vorhergehenden Ansprüche, **dadurch gekennzeichnet, dass** die Drehgeschwindigkeit der Rolle verringert wird, wenn die Drehgeschwindigkeit der Schraube die Schlupf-Grenzgeschwindigkeit überschreitet.

5. Regulierungsverfahren nach Anspruch 4, **dadurch gekennzeichnet, dass** dann, wenn die Geschwindigkeit der Schraube die Schlupf-Grenzgeschwindigkeit nicht überschreitet, die Rollengeschwindigkeit mit der Verringerung des korrigierten Werts Ks' des Proportionalitätskoeffizienten zunimmt.

6. Strangpressvorrichtung, die für die Fertigung eines ununterbrochenen Bandes eines Profilprodukts (P) aus einem Elastomergemisch bestimmt ist und Folgendes umfasst: eine Schraube (2), die in einem festen Körper (1), dessen Ausgang ein Strangpressmundstück (5) aufweist, rotatorisch angetrieben wird, und wenigstens eine zylindrische Rolle (3), die rotatorisch angetrieben wird und deren Achse senkrecht zu der Austrittsrichtung des Produkts aus dem Mundstück ist, und die ferner Folgendes umfasst: Regulierungsmittel, die ein Verfahren nach einem der Ansprüche 1 bis 4 ausführen können, insbesondere Mittel zum Steuern der Drehgeschwindigkeit ($\Omega_{Schraube}$) der Schraube als Funktion der Rollengeschwindigkeit, wobei die Geschwindigkeit der Schraube mit der Drehgeschwindigkeit ($\Omega_{Rolle}$) der Rolle über einen Proportionalitätskoeffizienten direkt in Beziehung steht, und

- Mittel (13) zum Speichern von Werten, die für ein gegebenes Elastomergemisch und ein gegebenes Profilprodukt (P) bestimmt sind, des Sollwerts Ks des Proportionalitätskoeffizienten und der Sollwerte der Rollengeschwindigkeit $\Omega_{Rolle}$ bis zu einer maximalen Sollgeschwindigkeit der Rolle $\Omega_{Rolle\,max}$, für die die maximale Drehgeschwindigkeit der Schraube $\Omega_{Schraube\,max} = KS * \Omega_{Rolle\,max}$ ist,
- Messmittel, die zu jedem Zeitpunkt die Dicke (e) des Profilprodukts (P) am Ausgang des Strangpressmundstücks (5) bestimmen,
- ein erstes Regulierungsmittel, das den Sollwert des Koeffizienten Ks als Funktion des Werts der Dicke (e) auf einen Wert Ks' korrigiert, derart, dass der gemessene Wert auf einen Sollwert ($e_{Sollwert}$) der Dicke des Profils (P) zurückgeführt wird,
- Mittel zum Berechnen der Drehgeschwindigkeit der Schraube unter Berücksichtigung des neuen Werts Ks', derart, dass $\Omega'_{Schraube} = Ks' * \Omega_{Rolle}$,

**dadurch gekennzeichnet, dass** sie Steuermittel umfasst, die die Geschwindigkeit der Rolle als Funktion des korrigierten Werts Ks' des Proportionalitätskoeffizienten einstellen, wenn die Drehgeschwindigkeit $\Omega'_{Schraube}$ der Schraube eine Schlupf-Grenzgeschwindigkeit überschreitet.

7. Strangpressvorrichtung nach Anspruch 6, **dadurch gekennzeichnet, dass** die Steuermittel Mittel umfasst, um die Geschwindigkeit $\Omega_{Rolle\,Gesetz}$ der Rolle so, dass die Geschwindigkeit der Schraube die Schlupf-Grenzgeschwindigkeit nicht überschreitet, gemäß der folgenden Formel zu berechnen:

$$\Omega_{Rolle\,Gesetz} = \left( \frac{\Omega_{Schraube\,max}{}^{n/n-1}}{\Omega_{Rolle\,max}{}^{1/n-1}} \right) \cdot \frac{1}{Ks'}{}^{n/n-1},$$

wobei n eine Konstante ist, die einem gegebenen Elastomergemisch zugeordnet ist.

8. Strangpressvorrichtung nach Anspruch 7, **dadurch gekennzeichnet, dass** die Steuermittel die berechnete Geschwindigkeit $\Omega_{Rolle\,Gesetz}$ der Rolle mit der im Voraus definierten Sollgeschwindigkeit $\Omega_{Rolle}$ für eine gegebene Solldicke vergleichen und dass sie als Referenzwert $\Omega_{Rolle\,Referenz}$ der Rollengeschwindigkeit jenen Wert wählen, der der Kleinere von den beiden Werten ist.

9. Strangpressvorrichtung nach einem der Ansprüche 6 bis 8, **dadurch gekennzeichnet, dass** die Steuermittel die Drehgeschwindigkeit der Rolle verringern, wenn die Drehgeschwindigkeit der Schraube eine Schlupf-Grenzgeschwindigkeit überschreitet.

10. Strangpressvorrichtung nach Anspruch 9, **dadurch gekennzeichnet, dass** die Steuermittel dann, wenn die Geschwindigkeit der Schraube die Schlupf-Grenzgeschwindigkeit nicht überschreitet, die Geschwindigkeit der Rolle bei einer Abnahme des korrigierten Werts Ks' des Proportionalitätskoeffizienten erhöhen.

**Claims**

1. Method for regulating an extrusion device intended for the manufacture of a continuous strip of profiled product (P) made of an elastomeric compound, comprising a screw (2) rotationally driven in a fixed barrel (1) the outlet of which comprises an extrusion die (5) and at least one rotationally driven cylindrical roller (3), the rotational speed of the screw ($\Omega_{screw}$) being directly connected to the rotational speed of the roller ($\Omega_{roller}$) by a proportionality coefficient, the said regulating method comprising the following steps:

   - for a given elastomeric compound and a given profiled product (P), a setpoint value Ks of the proportionality coefficient, and the setpoint values for the roller speed $\Omega_{roller}$ up to a maximum setpoint roller speed $\Omega_{roller\,max}$ for which the maximum rotational speed of the screw is $\Omega\,screw\,_{max} = Ks*\Omega\,_{roller\,max}$, are determined,
   - the thickness (e) of the profiled product (P) leaving the extrusion die (5) is measured at each instant,
   - the setpoint value of the coefficient Ks is corrected as a function of the measured value of the thickness (e) to a corrected value Ks' so as to bring the said measured value back to a setpoint value ($e_{setpoint}$) of the thickness of the profiled element (P),
   - the rotational speed of the screw is corrected taking account of the new corrected value Ks' of the proportionality coefficient, such that $\Omega'_{screw} = Ks'*\Omega_{roller}$

   **characterized in that** the roller speed is adjusted as a function of the corrected value Ks' of the proportionality coefficient when the rotational speed of the screw $\Omega'_{screw}$ exceeds a slip limit speed.

2. Regulating method according to Claim 1, **characterized in that** the roller speed $\Omega_{roller\,law}$ is calculated in such a way that the screw speed does not exceed the slip limit speed, using the formula:

$$\Omega\,_{roller\,law} = (\Omega\,_{screw\,max}{}^{n/n-1}/\,\Omega\,_{roller\,max}{}^{1/n-1})*1/Ks'\,^{n/n-1},$$

   where n is a constant corresponding to a given elastomeric compound.

3. Regulating method according to Claim 2, **characterized in that** the calculated roller speed $\Omega_{roller\,law}$ is compared against the setpoint speed predefined for a given setpoint thickness $\Omega_{roller}$ and **in that** the lower of the two values is chosen as the reference roller speed value $\Omega_{roller\,ref}$.

4. Regulating method according to one of the preceding claims, **characterized in that** the rotational speed of the roller is reduced when the rotational speed of the screw exceeds a slip limit speed.

5. Regulating method according to Claim 4, **characterized in that** when the screw speed does not exceed the slip limit speed, the roller speed increases with the reduction in the corrected value Ks' of the proportionality coefficient.

6. Extrusion device intended for the manufacture of a continuous strip of profiled product (P) made of an elastomeric compound, comprising a screw (2) rotationally driven in a fixed barrel (1) the outlet of which comprises an extrusion die (5) and at least one cylindrical roller (3) driven in rotation and the axis of which is perpendicular to the direction in which the product leaves the die, comprising regulating means able to implement a method according to one of Claims 1 to 4, notably means for controlling the rotational speed of the screw ($\Omega_{screw}$) as a function of the roller speed, the screw speed being directly connected to the rotational speed of the roller ($\Omega_{roller}$) by a proportionality coefficient, and

   - memory-storage means (13) for storing the values determined for a given elastomeric compound and a given profiled product (P), the setpoint value Ks of the proportionality coefficient, and the setpoint values for the roller speed $\Omega_{roller}$ up to a maximum setpoint roller speed $\Omega_{roller\,max}$, for which the maximum rotational speed of the screw is $\Omega_{screw\,max} = Ks*\Omega\,_{roller\,max}$,
   - measurement means which at each instant determine the thickness (e) of the profiled product (P) leaving the extrusion die (5),
   - a first regulating means which corrects the setpoint value of the coefficient Ks as a function of the value of the thickness (e) to a value Ks' so as to bring the measured value back to a setpoint value ($e_{setpoint}$) of the thickness of the profiled element (P),
   - a means for calculating the rotational speed of the screw taking account of the new value Ks', such that

$$\Omega'_{screw} = Ks'^* \Omega_{roller},$$

**characterized in that** it comprises control means which adjust the roller speed as a function of the corrected value Ks' of the proportionality coefficient when the rotational speed of the screw $\Omega'_{screw}$ exceeds a slip limit speed.

7.  Extrusion device according to Claim 6, **characterized in that** the said control means comprise means for calculating the roller speed $\Omega_{roller\ law}$ in such a way that the screw speed does not exceed the slip limit speed, using the formula:

$$\Omega_{roller\ law} = (\Omega_{screw\ max}^{\ n/n-1} / \Omega_{roller\ max}^{\ 1/n-1}) * 1/Ks'^{\ n/n-1},$$

where n is a constant associated with a given elastomeric compound.

8.  Extrusion device according to Claim 7, **characterized in that** the said control means compare the calculated roller speed $\Omega_{roller\ law}$ against the setpoint speed predefined for a given setpoint thickness $\Omega_{roller}$ and **in that** they choose the lower of the two values as the reference roller speed value $\Omega_{roller\ ref}$.

9.  Extrusion device according to one of Claims 6 to 8, **characterized in that** the said control means reduce the rotational speed of the roller when the rotational speed of the screw exceeds a slip limit speed.

10. Extrusion device according to Claim 9, **characterized in that** when the screw speed does not exceed the slip limit speed, the said control means increase the roller speed with the reduction in the corrected value Ks' of the proportionality coefficient.

**Fig 1**

Fig 2

Fig 3

**Fig 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4428896 A
- FR 1155591